# EUROPEAN PATENT APPLICATION

(11) **EP 2 315 296 A1**
(43) Date of publication of application: **27.04.2011**
(21) Application number: 09808229.0
(22) Date of filing: 13.08.2009
(51) Int. Cl.: H01M 2/20, H01M 2/10, H01M 2/30, H01M 10/50

(54) **BATTERY PACK STRUCTURE**

(30) Priority: 19.08.2008 JP 2008210304
(71) Applicant: Mitsubishi Heavy Industries, Ltd., Tokyo 108-8215 (JP)
(72) Inventor: OGAWA Kiyomitsu, Sagamihara-shi Kanagawa 229-1193 (JP)
(74) Representative: Henkel, Feiler & Hänzel
(86) International application number: PCT/JP2009/064306
(87) International publication number: WO 2010/021293

(57) **Abstract**

An object of the present invention is to provide a battery pack structure having a structure to cool batteries and being capable of preventing cooling wind from hitting electrodes of the batteries. To achieve the object, the battery pack structure includes: a sheet (9) in which multiple battery positioning holes (10) are formed at constant intervals and another sheet (8); multiple batteries (11) whose end portions on the opposite side to electrodes thereof are fitted into the battery positioning holes (10) in the sheet (9), respectively, so that the batteries (11) are housed with a gap (12) formed between the batteries (11) adjacent to each other; a cap (15) having electrode holes (18A, 18B) through which electrodes (14A, 14B) of the batteries are inserted, the cap (15) covering electrode-side end portions of the batteries in such a way as to separate a space including the electrodes (14A, 14B) from a space including the gap (12); a conductor (bus bar) connecting the batteries at their electrodes in the space including the electrodes; and a shielding unit (case (1), fixing plate (20), top cover (22)) shielding the space including the electrodes from an outside.

## Description

### TECHNICAL FIELD

The present invention relates to a battery pack structure including multiple batteries (battery cells or battery modules).

### BACKGROUND ART

A battery pack including multiple batteries (battery cells or battery modules) is mounted, for example, to electric forklifts provided with an electric motor as their drive source, hybrid forklifts provided with an engine and an electric motor as their drive sources, and the like.

### PRIOR ART LITERATURE

### PATENT LITERATURE

Patent Literature 1: Japanese Patent Application Publication No. 2001-283937

### SUMMARY OF THE INVENTION

### PROBLEMS TO BE SOLVED BY THE INVENTION

However, the formation of a battery pack structure with multiple batteries (battery cells or battery modules) is not just simple gathering of multiple batteries (battery cells or battery modules). Problems as below have to be solved.

(1) When, for example, lithium ion batteries or the like with metallic containers (what is called can type) are used as the batteries (battery cells or battery modules) housed in the battery pack, the containers of the batteries adjacent to each other need to be electrically insulated from each other since the containers and electrodes are electrically conductive to each other.
(2) Lithium ion batteries and the like have upper limit temperatures up to which their performance can be maintained, and the batteries therefore need to be cooled so as not to exceed the upper limit temperatures. Thus, it is necessary to form a structure in which a gap is created between the adjacent batteries and cooling wind is caused to flow through this gap.
(3) Then, it is also necessary to prevent the cooling wind flowing through the gap from flowing partly to the electrode side of the batteries and hitting the electrodes. This is because if the cooling wind contains dust and moisture, the dust and moisture may adhere to the electrodes when the cooling wind hits the electrodes and may possibly deteriorate the performance of the batteries.
(4) Also, when mounted to a hybrid forklift, an electric forklift or the like, the battery pack needs to have a vibration resistance enough to withstand vibrations of the vehicle.

Thus, in view of the above circumstances, an object of the prevent invention is to provide a battery pack structure having a structure to cool batteries and being capable of preventing cooling wind from hitting electrodes of the batteries, and further having a structure to electrically insulate adjacent battery containers from each other and also possessing a vibration resistance.

### MEANS FOR SOLVING THE PROBLEMS

A battery pack structure of a first invention for solving the above problems is characterized by including:
a sheet in which a plurality of battery positioning holes are formed at constant intervals;
a plurality of batteries whose end portions on the opposite side to electrodes thereof are fitted into the battery positioning holes in the sheet, so that the batteries are housed in such a manner that a gap is formed between the batteries adjacent to each other;
a cap having electrode holes through which the electrodes of the batteries are inserted, the cap covering electrode-side end portions of the batteries in such a way as to separate a space including the electrodes from a space including the gap;
a conductor connecting the batteries at their electrodes in the space including the electrodes; and
a shielding unit shielding the space including the electrodes from an outside.

A battery pack structure of a second invention is the battery pack structure of the first invention characterized in that
the cap is provided to each of the batteries individually, and
the caps are configured to separate the space including the electrodes from the space including the gap in such a state that the caps cover the electrode-side end portions of the respective batteries, the electrodes of the batteries are inserted respectively into the electrode holes of the caps, and the caps adjacent to each other are in tight contact with each other.

A battery pack structure of a third invention is the battery pack structure of the first invention characterized in that
the plurality of batteries are grouped into a plurality of groups,
the cap is formed as integrated caps provided to the groups, respectively, and
the integrated caps are configured to separate the space including the electrodes from the space including the gap in such a state that the integrated caps each cover the electrode-side end portions of the batteries in the corresponding one of the groups, the electrodes of the batteries in the groups are inserted respectively into the electrode holes of the integrated caps, and the integrated caps adjacent to each other are in tight contact with each other.

A battery pack structure of a fourth invention is the battery pack structure of the first invention characterized in that
the cap is formed as one integrated cap provided to all the plurality of batteries, and
the integrated cap is configured to separate the space including the electrodes from the space including the gap in such state that the integrated cap covers the electrode-side end portions of the plurality of batteries, and the electrodes of the plurality of batteries are inserted into the electrode holes of the integrated cap.

A battery pack structure of a fifth invention is the battery pack structure of any one of the first to fourth inventions characterized in that the sheet is an electrically insulating sheet, and the cap is an electrically insulating cap.

A battery pack structure of a sixth invention is the battery pack structure of the fifth invention characterized in that the electrically insulating sheet and the electrically insulating cap are each made of rubber.

### EFFECTS OF THE INVENTION

The batter pack structure of the first invention is characterized by including: the sheet in which the plurality of battery positioning holes are formed at constant intervals; the plurality of batteries whose end portions on the opposite side to the electrodes thereof are fitted into the battery positioning holes in the sheet, so that the batteries are housed in such a manner that the gap is formed between the batteries adjacent to each other; the cap having electrode holes through which the electrodes of the batteries are inserted, the cap covering electrode-side end portions of the batteries in such a way as to separate the space including the electrodes from the space including the gap; the conductor connecting the batteries at their electrodes in the space including the electrodes; and the shielding unit shielding the space including the electrodes from an outside. Thus, cooling wind can flow through the gap between the adjacent batteries. Accordingly, a structure to cool the batteries can be achieved. Moreover, the cap separates the space including the electrodes from the space including the gap. Thus, the cooling wind flowing through the gap between the batteries can be inhibited by the cap from flowing partly to the electrodes of the batteries. Accordingly, even if the cooling wind contains dust and moisture, it is possible to prevent the dust and moisture from adhering to the electrodes to deteriorate the performance of the batteries.

The battery pack structure of the second invention is the battery pack structure of the first invention characterized in that the cap is provided to each of the batteries individually, and the caps are configured to separate the space including the electrodes from the space including the gap in such a state that the caps cover the electrode-side end portions of the respective batteries, the electrodes of the batteries are inserted respectively into the electrode holes of the caps, and the caps adjacent to each other are in tight contact with each other. Thus, advantageous effects similar to those by the first invention can be achieved. In addition, since the cap is provided to each individual battery and covers the electrode-side end portion of the corresponding battery, even when the number of batteries and the arrangement of the batteries are changed in the battery pack, these changes can be handled easily.

The battery pack structure of the third invention is the battery pack structure of the first invention characterized in that the plurality of batteries are grouped into a plurality of groups, the cap is formed as the integrated caps provided to the groups, respectively, and the integrated caps are configured to separate the space including the electrodes from the space including the gap in such a state that the integrated caps each cover the electrode-side end portions of the batteries in the corresponding one of the groups, the electrodes of the batteries in the groups are inserted respectively into the electrode holes of the integrated caps, and the integrated caps adjacent to each other are in tight contact with each other. Thus, advantageous effects similar to those by the first invention can be achieved. In addition, since the multiple batteries are grouped into multiple groups, and the cap is formed as integrated caps provided to the groups, respectively, and each covering the electrode-side end portions of the batteries in the corresponding one of the groups, the work of covering the batteries with caps can be made simple.

The battery pack structure of the fourth invention is the battery pack structure of the first invention characterized in that the cap is formed as the one integrated cap provided to all the plurality of batteries, and the integrated cap is configured to separate the space including the electrodes from the space including the gap in such state that the integrated cap covers the electrode-side end portions of the plurality of batteries, and the electrodes of the plurality of batteries are inserted into the electrode holes of the integrated cap. Thus, advantageous effects similar to those by the first invention can be achieved. In addition, since the cap is formed as one integrated cap provided to all the multiple batteries and covering the electrode-side end portions of the multiple batteries, the work of covering the batteries with caps can be made significantly simple.

The battery pack structure of the fifth invention is the battery pack structure of any one of the first to fourth inventions characterized in that the sheet is the electrically insulating sheet, and the cap is the electrically insulating cap. Thus, the gap formed between the batteries can achieve not only a structure to cool the batteries, but also a structure to electrically insulate containers of the adjacent batteries from each other.

The battery pack structure of the sixth invention is the battery pack structure of the fifth invention characterized in that the electrically insulating sheet and the electrically insulating cap are each made of rubber. Thus, vibrations can be absorbed by the rubber sheet and the rubber cap. Accordingly, the battery pack structure is given a vibration resistance enough to withstand vibrations when mounted to a hybrid forklift or the like.

### BRIEF DESCRIPTION OF THE DRAWINGS

[Fig. 1] Fig. 1 is a view showing a manufacturing step for a battery pack according to Embodiment 1 of the present invention.
[Fig. 2] Fig. 2 is a view showing a manufacturing step for the battery pack according to Embodiment 1 of the present invention.
[Fig. 3] Fig. 3 is a view showing a manufacturing step for the battery pack according to Embodiment 1 of the present invention.
[Fig. 4] Fig. 4 is a view showing a manufacturing step for the battery pack according to Embodiment 1 of the present invention.
Fig. 4(a) is a perspective view of a cap, and Fig. 4(b) is a cross-sectional view taken along a line A-A of Fig. 4(a).
[Fig. 5] Fig. 5 is a view showing a manufacturing step for the battery pack according to Embodiment 1 of the present invention.
[Fig. 6] Fig. 6 is a view showing a manufacturing step for the battery pack according to Embodiment 1 of the present invention.
[Fig. 7] Fig. 7 is a view showing a manufacturing step for the battery pack according to Embodiment 1 of the present invention.
[Fig. 8] Fig. 8 is a view showing a manufacturing step for the battery pack according to Embodiment 1 of the present invention.
[Fig. 9] Fig. 9 is a view showing a manufacturing step for the battery pack according to Embodiment 1 of the present invention.
[Fig. 10] Fig. 10 is a view showing a manufacturing step for the battery pack according to Embodiment 1 of the present invention.
[Fig. 11] Fig. 11 is an exploded perspective view of the battery pack.
[Fig. 12] Fig. 12 is a view showing a manufacturing step for a battery pack according to Embodiment 2 of the present invention.
[Fig. 13] Fig. 13 is a view showing a manufacturing step for the battery pack according to Embodiment 2 of the present invention. Fig. 13 (a) is a perspective view of a cap, and Fig. 13 (b) is a cross-sectional view taken along a line B-B of Fig. 13 (a) .
[Fig. 14] Fig. 14 is a view showing a manufacturing step for the battery pack according to Embodiment 2 of the present invention.
[Fig. 15] Fig. 15 is a view showing a manufacturing step for the battery pack according to Embodiment 2 of the present invention.
[Fig. 16] Fig. 16 is a view showing a manufacturing step for the battery pack according to Embodiment 2 of the present invention.
[Fig. 17] Fig. 17 is a view showing a manufacturing step for the battery pack according to Embodiment 2 of the present invention.
[Fig. 18] Fig. 18 is a view showing a manufacturing step for the battery pack according to Embodiment 2 of the present invention.
[Fig. 19] Fig. 19 is a view showing a manufacturing step for the battery pack according to Embodiment 2 of the present invention.
[Fig. 20] Fig. 20 is a view showing a manufacturing step for the battery pack according to Embodiment 2 of the present invention.

### MODES FOR CARRYING OUT THE INVENTION

Hereinbelow, embodiments of the present invention will be described in detail based on the drawings.

### <Embodiment 1>

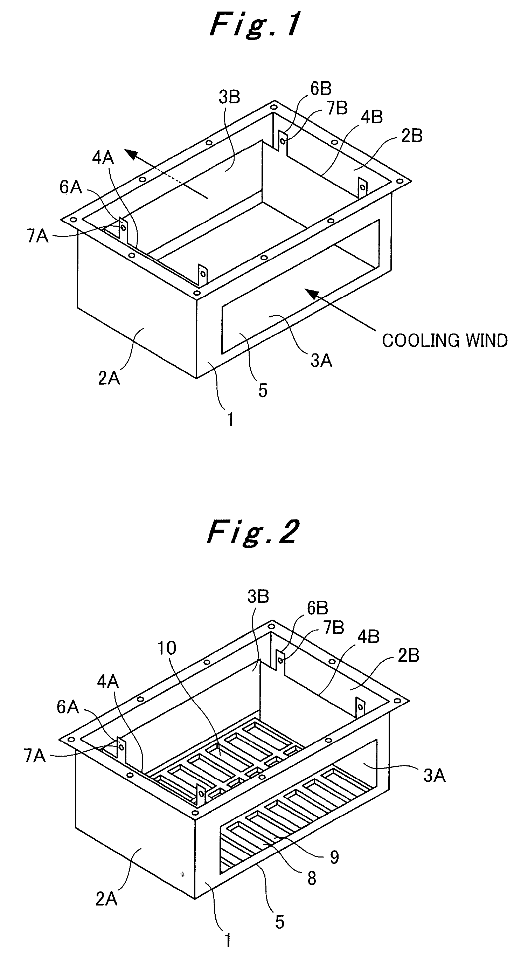

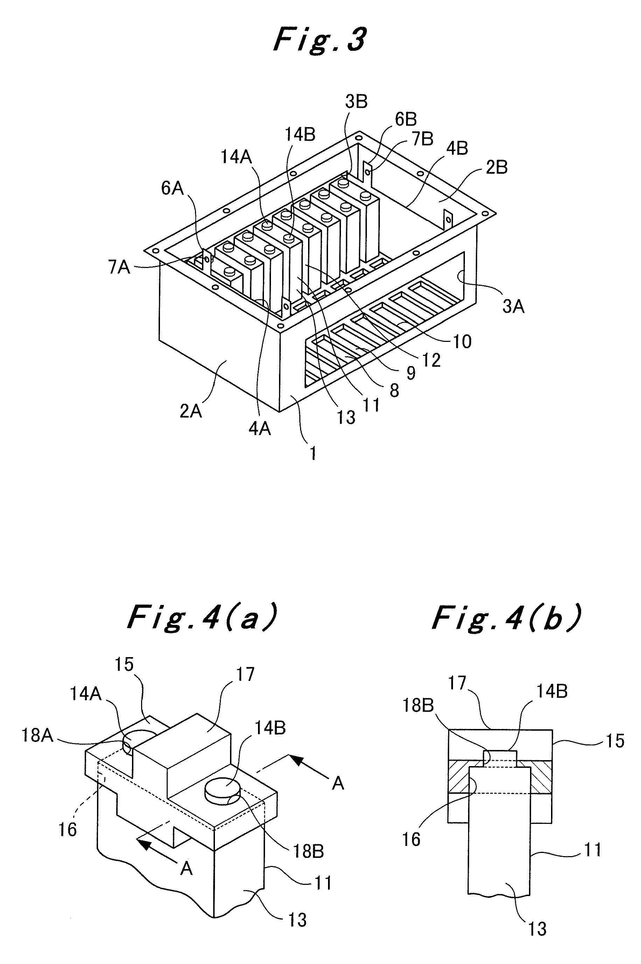

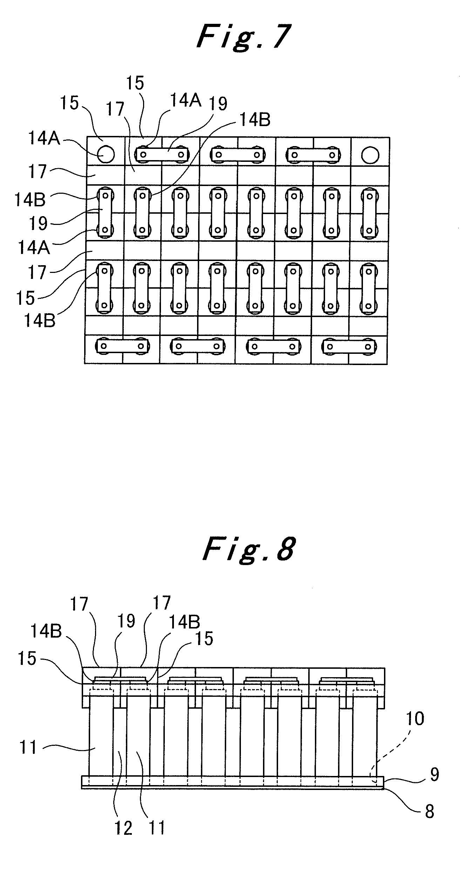

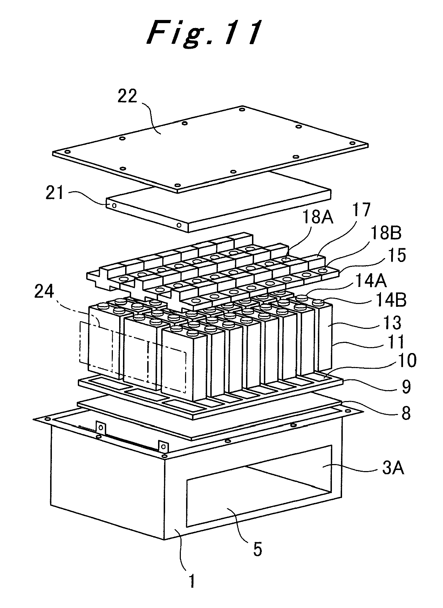

Figs. 1 to 10 are views showing manufacturing steps for a battery pack according to Embodiment 1 of the present invention. Fig. 11 is an exploded perspective view of the battery pack. Note that Fig. 4 (a) is a perspective view of a cap, and Fig. 4(b) is a cross-sectional view taken along the line A-A of Fig. 4(a). Meanwhile, the illustration of a case is omitted in Figs. 7 and 8.

A battery pack structure of Embodiment 1 will be described below in accordance with manufacturing steps therefor.

As shown in Figs. 1 and 11, a case 1 of the battery pack is of a rectangular solid shape. Both left and right lateral faces of the case 1 are closed by lateral plates 2A and 2B, respectively, whereas both front and rear lateral faces thereof have openings 3A and 3B, respectively. Cooling wind (cooling air) supplied by an unillustrated fan or the like flows into the case 1 from the opening 3A and then flows out from the other opening 3B, as indicated by arrows. Support plates 4A and 4B are provided to the left and right lateral plates 2A and 2B at their inner sides, respectively. These support plates 4A and 4B are fixed to a bottom plate 5 of the case 1. In addition, screw holes 7A and 7B are formed in protrusions 6A and 6B given at the upper ends of the support plates 4A and 4B.

As shown in Figs. 2 and 11, on the bottom surface 3A of the case 1, there are placed a rubber sheet 8 (electrically insulating sheet) formed in a rectangular shape and another rubber sheet 9 (electrically insulating sheet) laid thereon. While the sheet 8 is a plain flat sheet, the sheet 9 has multiple rectangular battery positioning holes 10 formed therein at constant intervals. Note that the sheets 8 and 9 may be an integrated unit.

Next, as shown in Figs. 3 and 11, end portions (bottom portions) of multiple batteries 11 on the opposite side to electrodes are fitted into the battery positioning holes 10 in the sheet 9, respectively. Accordingly, a gap 12 through which cooling wind (air) flows is formed between each pair of adjacent batteries 11. Meanwhile, this gap 12 electrically insulates containers 13 of the adjacent batteries 11 from each other. Each battery 11 is a lithium ion battery or the like, for example. Moreover, the battery 11 is such that its container 13 in a rectangular solid shape is made of a metal such as aluminum (what is called can type) and that the container 13 is electrically conductive to any one of positive and negative electrodes (terminals) 14A and 14B provided to one end surface of the container 13. Note that, as the batteries 11 constituting the battery pack structure, a single battery cell may be used or a battery module formed of multiple battery cells may be used.

Then, as shown in Figs. 4 and 11, an end portion of each battery 11 at its electrodes 14A and 14B side is covered with a cap 15 (electrically insulating cap) . This cap 15 is provided to each individual battery 11 (one cap 15 for one battery 11) . The cap 15 is made of rubber (rubber cap), and one surface thereof (lower surface in the illustrated example) has a recess portion 16 in which to fit the electrode-side end portion of the battery 11, while the other surface (upper surface in the illustrated example) has a protruding portion 17 formed in a center portion thereof. In addition, electrode holes 18A and 18B are formed in the cap 15. Thus, when the battery 11 is covered with the cap 15, the electrodes 14A and 14B of the battery 11 are inserted into the electrode holes 18A and 18B of the cap 15, respectively, and project from the other surface.

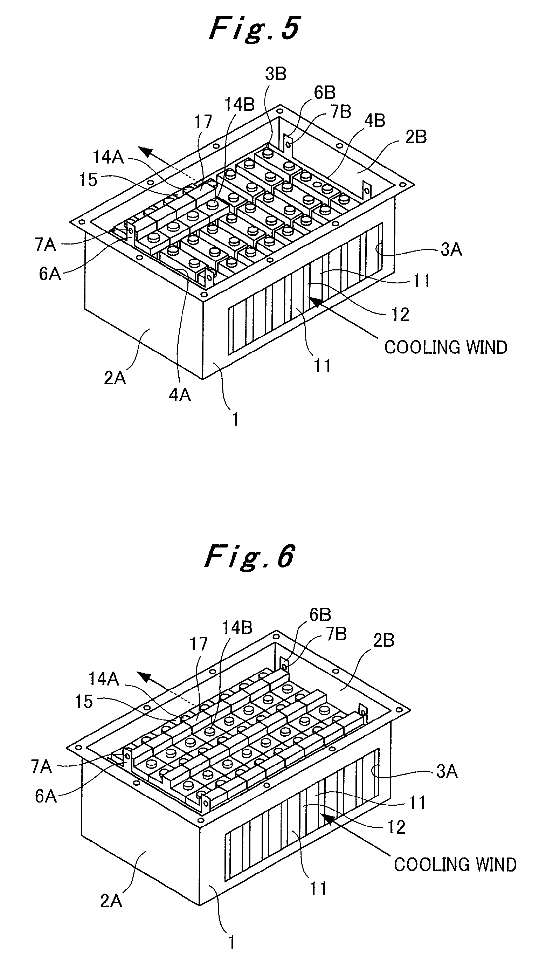

Fig. 5 shows a state where some of the batteries 11 are covered with the caps 15. Figs. 6 to 8 each show a state where all the batteries 11 are covered with the caps 15. In these states, the caps 15 adjacent to each other are in tight contact with each other, so that spaces including the electrodes 14A and 14B of the batteries 11 projecting from the electrode holes 18A and 18B is separated by these caps 15 from spaces including the gaps 12 between the batteries 11. Accordingly, cooling wind flowing through the gaps 12 between the batteries 11 can be inhibited by the caps 15 from flowing partly to the electrodes 14A and 14B of the batteries 11.

Next, as shown in Figs. 7 and 8, the electrodes 14A and 14B (specifically, portions of the electrodes 14A and 14B projecting from the electrode holes 18A and 18B) of the batteries 11 are electrically connected by bus bars 19 which are conductors such as copper plates. Consequently, the multiple batteries 11 are in serial or parallel connection as a whole. Note that the electrical connection of the electrodes 14A and 14B of the batteries 11 can be achieved not only by the bus bars 19 but also by conductors other than bus bars (e.g., electric cables or the like).

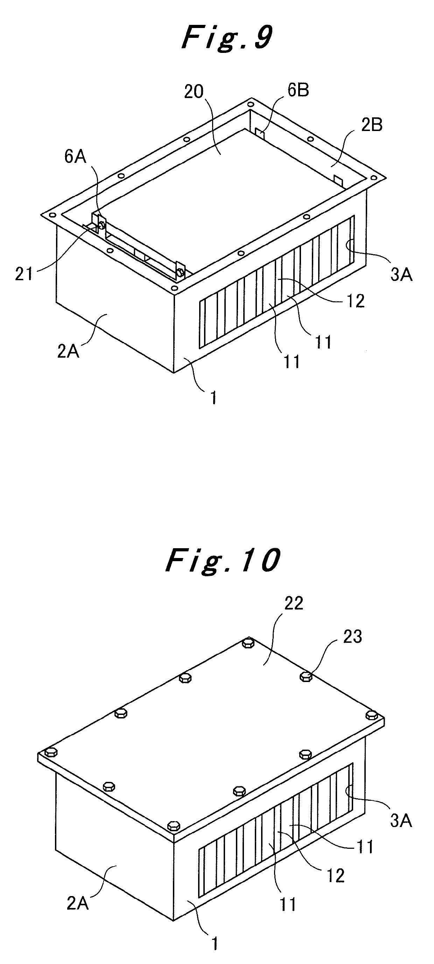

Next, as shown in Figs. 9 and 11, the caps 15 are covered with a fixing plate 20 from above. The fixing plate 20 is fixed to the protrusions 16A and 16B of the support plates 4A and 4B with screws 21. At this time, the protruding portions 17 formed on the caps 15 allows the formation of spaces between the caps 15 and the fixing plate 20, specifically, around the electrodes 14A and 14B. These spaces around the electrodes 14A and 14B are separated by the caps 15 from the spaces which include the main bodies of the batteries 11 and which cooling wind flows through (i.e., the spaces which include the gaps 12). Note that the spaces around the electrodes 14A and 14B may be formed by providing protruding portions to the fixing plate 20, instead of providing the convex portions 17 to the caps 15.

Lastly, as shown Figs. 10 and 11, the case 1 is covered with a top cover 22 from above. The top cover 22 is fixed to a peripheral portion of the case 11 with screws 23. The case 1, the fixing plate 20 and the top cover 22 function as a shielding unit to shield, from the outside, the spaces including the electrodes 14A and 14B of the batteries 11 projecting from the electrode holes 18A and 18B of the caps 15. Hence, they prevent water, dust and the like from the outside from adhering to the electrodes 14A and 14B. Note that the configuration of the shielding unit is not limit to this. Any structure can be employed as long as it is capable of shielding the spaces including the electrodes 14A and 14B from the outside. Meanwhile, reference numeral 24 in Fig. 11 represents an electronic circuit board for battery control (indicated by a perspective view of a dashed-dotted line for the sake of simple explanation). This electronic circuit board 24 is also housed inside the case 1.

As described above, the battery pack structure of Embodiment 1 is characterized by including: the sheet 9 in which the multiple battery positioning holes 10 are formed at constant intervals and the sheet 8 (or a sheet obtained by integrating these sheets together); the multiple batteries 11 whose end portions on the opposite side to the electrodes thereof are fitted into the battery positioning holes 10 of the sheet 9, respectively, so that the batteries 11 are housed with the gap 12 formed between the batteries 11 adjacent to each other; the caps 15 each having the electrode holes 18A and 18B through which the electrodes 14A and 14B of the corresponding battery 11 are inserted, the caps 15 covering the electrode-side end portions of the batteries 11 in such a way as to separate the spaces including the electrodes 14A and 14B from the spaces including the gaps 12; the conductors (the bus bars 19 or the like) connecting the batteries 11 at their electrodes 14A and 14B in the spaces including the electrodes 14A and 14B; and the shielding units (the case 1, the fixing plate 20, the top cover 22) shielding, from the outside, the spaces including the electrodes 14A and 14B. Thus, cooling wind can flow through the gaps 12 between the adjacent batteries 11. Accordingly, a structure to cool the batteries 11 can be achieved. Moreover, the caps 15 separate the spaces including the electrodes 14A and 14B from the spaces including the gaps 12. Thus, the cooling wind flowing through the gaps 12 between the batteries 11 can be inhibited by the caps 15 from flowing partly to the electrodes 14A and 14B of the batteries 11. Accordingly, even if the cooling wind contains dust and moisture, it is possible to prevent the dust and moisture from adhering to the electrodes 14A and 14B to deteriorate the performance of the batteries 11.

The battery pack structure of Embodiment 1 is also characterized in that: the caps 15 are provided to the batteries 11 individually; the caps 15 are configure to separate the spaces including the electrodes 14A and 14B from the spaces including the gaps 12 in such a state that the caps 15 cover the electrode-side end portions of the respective batteries 11, the electrodes 14A and 14B of the batteries 11 are inserted respectively into the electrode holes 18A and 18B of the caps 15, and the caps 15 adjacent to each other are in tight contact with each other. Thus, in addition to the above described advantageous effects, there is provided such an advantageous effect that even when the number of batteries and the arrangement of the batteries are changed in the battery pack, these changes can be handled easily.

The battery pack structure of Embodiment 1 is also characterized in that the sheets 8 and 9 (or a sheet obtained by integrating these sheets together) are electrically insulating sheets, and the caps 15 are electrically insulating caps. Thus, the gaps 12 formed between the batteries 11 can achieve not only a structure to cool the batteries 11, but also a structure to electrically insulate the containers 13 of the adjacent batteries 11 from each other.

The battery pack structure of Embodiment 1 is also characterized in that the sheets 8 and 9 (or a sheet obtained by integrating these sheets together) and the caps 15 are each made of rubber. Thus, vibrations can be absorbed by the rubber sheets 8 and 9 (or a rubber sheet obtained by integrating these sheets together) and the rubber caps 15. Accordingly, the battery pack structure is given a vibration resistance enough to withstand vibrations when mounted to a hybrid forklift or the like.

The caps 15 are provided to the batteries 11 individually. Note, however, that the present invention is not limited to this, and integrated caps as below may be used instead.

Specifically, though the illustration is omitted, the multiple batteries 11 constituting the battery pack are grouped into multiple groups (e.g., the 24 batteries 11 in the illustrated example are grouped into six groups each of four batteries 11). The caps (e.g., electrically insulating caps made of rubber or the like) are formed as an integrated cap provided respectively to the groups (e.g., four caps 15 are integrated together for each four batteries 11). The integrated cap each cover the electrode-side end portions of the batteries 11 in the corresponding one of the groups. The integrated caps are configured to separate spaces including the electrodes 14A and 14B projecting from the electrode holes from the spaces including the gaps 12 in such a state that the electrodes 14A and 14B of the batteries 11 in the groups are inserted respectively into the electrode holes of the integrated caps, and the integrated caps adjacent to each other are in tight contact with each other.

Even in the case of this configuration, advantageous effects similar to those described above can be achieved. In addition, in the case of this configuration, since the multiple batteries 11 are grouped into multiple groups, and the caps are formed as integrated caps provided respectively to the groups and each covering the electrode-side end portions of the batteries 11 in the corresponding one of the groups, the work of covering the batteries 11 with caps can be made simple.

Alternatively, though the illustration is omitted, the caps (e.g., electrically insulating caps made of rubber or the like) are formed as one integrated cap provided to all the multiple batteries 11 (e.g., 24 caps 15 are integrated together for the 24 batteries 11 in the illustrated example). The integrated cap is configured to separate the spaces including the electrodes 14A and 14B projecting from the electrode holes from the spaces including the gaps 12 in such state that the integrated cap covers the electrode-side end portions of the multiple batteries 11, and the electrodes 14A and 14B of the multiple batteries 11 are inserted respectively into the electrode holes of the integrated cap.

In the case of this configuration too, advantageous effects similar to those described above can be achieved. In addition, in the case of this configuration, since the caps are formed as one integrated cap provided to all the multiple batteries 11, and the integrated cap covers the electrode-side end portions of the multiple batteries 11, the work of covering the batteries 11 with caps can be made significantly simple.

### <Embodiment 2>

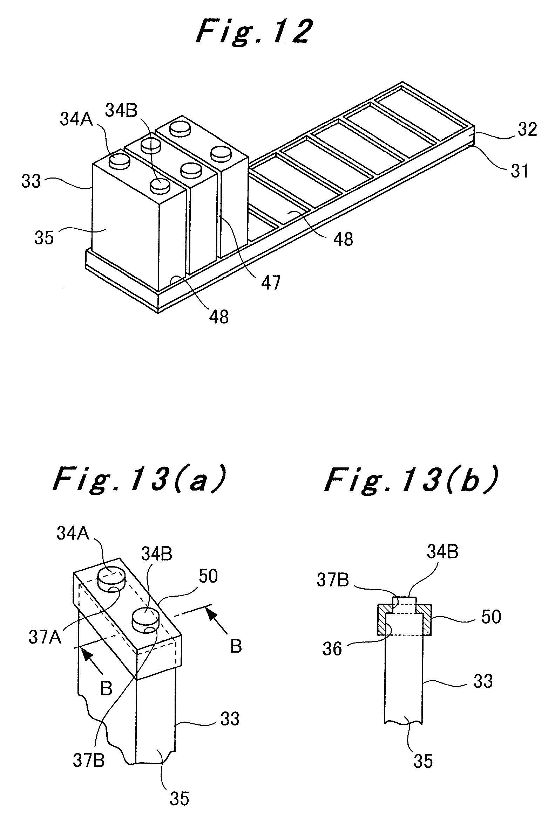

Figs. 12 to 20 are views showing manufacturing steps for a battery pack according to Embodiment 2 of the present invention. Note that Fig. 13 (a) is a perspective view of a cap, and Fig. 13(b) is a cross-sectional view taken along the line B-B of Fig. 13(a).

The structure of the battery pack of Embodiment 2 will be described below in accordance with manufacturing steps therefor.

As shown in Fig. 12, a rubber sheet 32 (electrically insulating sheet) is laid on top of a rubber sheet 31 (electrically insulating sheet) formed in a rectangular shape. While the sheet 31 is a plain flat sheet, the sheet 32 has multiple rectangular battery positioning holes 48 formed therein at constant intervals. Note that the sheets 31 and 32 may be an integrated unit.

Next, end portions (bottom portions) of multiple batteries 33 on the opposite side to electrodes thereof are fitted into the battery positioning holes 48 in the sheet 32, respectively. Accordingly, a gap 47 through which cooling wind (air) flows is formed between each pair of adjacent batteries 33. Meanwhile, the gap 47 electrically insulates containers 35 of the adjacent batteries 33. Each battery 33 is a lithium ion battery or the like, for example. Moreover, the battery 33 is such that its container 35 in a rectangular solid shape is made of a metal such as aluminum (what is called can type) and that the container 35 is electrically conductive to any one of positive and negative electrodes (terminals) 34A and 34B provided to one end surface of the container 35. Note that, as the batteries 33 constituting the battery pack structure, a single battery cell may be used or a battery module formed of multiple battery cells may be used.

Then, as shown in Fig. 13, an end portion of each battery 33 at its electrodes 34A and 34B side is covered with a cap 50 (electrically insulating cap) . This cap 50 is provided to each individual battery 33 (one cap 50 for one battery 33) . The cap 50 is made of rubber (rubber cap), and one surface thereof (lower surface in the illustrated example) has a recess portion 36 in which to fit the electrode-side end portion of the battery 33. In addition, electrode holes 37A and 37B are formed in the cap 50. Thus, when the battery 33 is covered with the cap 50, the electrodes 34A and 34B of the battery 33 are inserted into the electrode holes 37A and 37B of the cap 50, respectively, and project from the other surface of the cap 50.

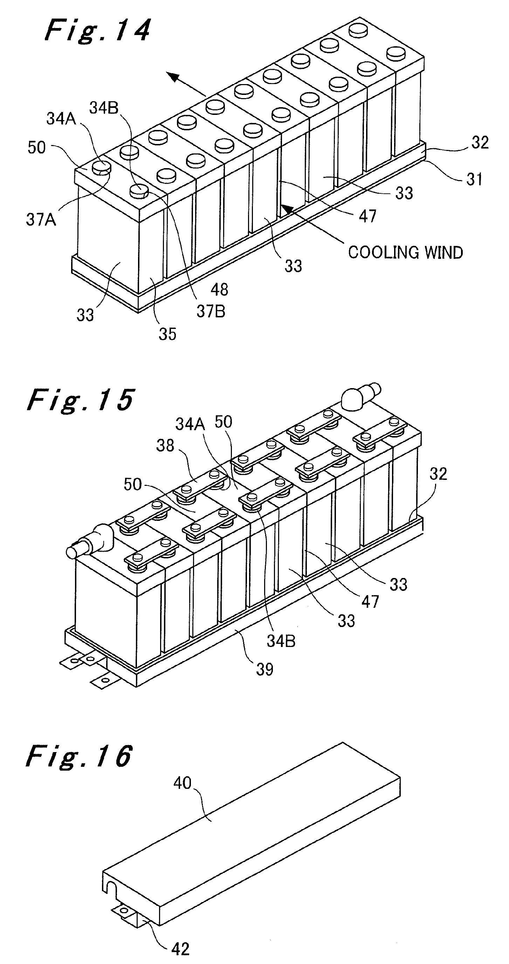

Fig. 14b shows a state where all the batteries 33 are covered with the caps 50. In this state, the caps 50 adjacent to each other are in tight contact with each other, so that spaces including the electrodes 34A and 34B of the batteries 33 projecting from the electrode holes 37A and 378B are separated by these caps 50 from spaces including the gaps 47 between the batteries 33. Accordingly, cooling wind flowing through the gaps 47 between the batteries 33 can be inhibited by the caps 50 from flowing partly to the electrodes 34A and 34B of the batteries 33.

Next, as shown in Fig. 15, the electrodes 34A and 34B (specifically, portions of the electrodes 34A and 34B projecting from the electrode holes 37A and 37B) of the batteries 33 are electrically connected by bus bars 38 which are conductors such as copper plates. Consequently, the multiple batteries 33 are in serial connection as a whole. Note that the electrical connection of the electrodes 34A and 34B of the batteries 33 can be achieved not only by the bus bars 38 but also by conductors other than bus bars (e.g., electric cables or the like).

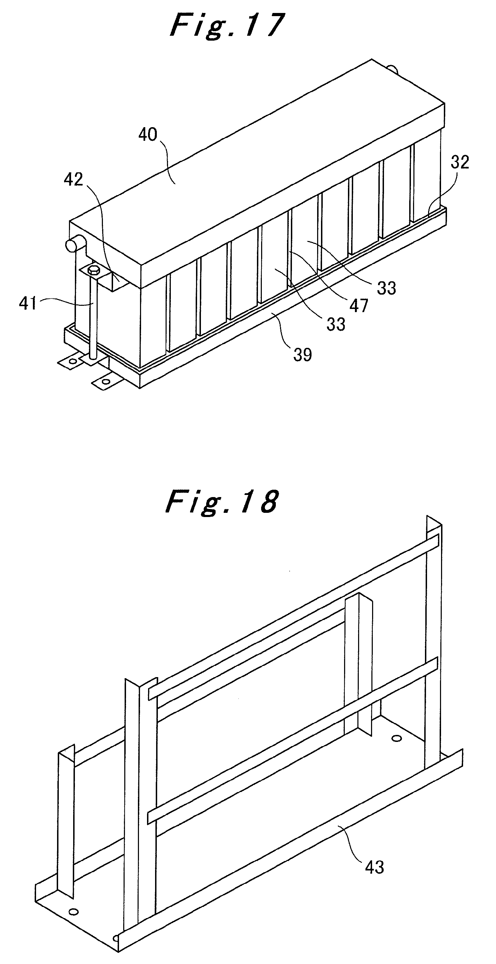

Next, as shown in Figs. 16 and 17, the sheets 31 and 32 are fitted into a frame 39, and the caps 50 are covered with a fixing plate 40 from above. The fixing plate 40 is fixed to the frame 39 with stud bolts 41. At this time, protruding portions 42 formed on the fixing plate 40 allow the formation of spaces between the caps 50 and the fixing plate 40, specifically, around the electrodes 34A and 34B. These spaces around the electrodes 34A and 34B are separated by the caps 50 from the spaces which include the main bodies of the batteries 33 and which cooling wind flows through (i.e., the spaces which include the gaps 47). Note that the spaces around the electrodes 34A and 34B may be formed by providing protruding portions to the caps 50 (see the cap 15 in Fig. 4), instead of providing the protruding portion 42 to the fixing plate 40. The fixing plate 40 functions as a shielding unit to shield, from the outside, the spaces including the electrodes 34A and 34B of the batteries 33 projecting from the electrode holes 37A and 37B of the caps 50. Hence, the fixing plate 40 prevents water, dust and the like from the outside from adhering to the electrodes 34A and 34B. Note that the configuration of the shielding unit is not limit to this. Any structure can be employed as long as it is capable of shielding the spaces including the electrodes 14A and 14B from the outside. In the illustrated example, the fixing plate 40 shields upper portions of the spaces including the electrodes 34A and 34B from the outside; however, the shielding is not limited to this. It is possible to provide, for example, a shielding unit configured to shield the entire spaces including the electrodes 34A and 34B (that is, shielding not only the upper portions but also lateral portions of the spaces) from the outside.

As a result, one battery pack is formed. In the illustrated example, two battery packs are manufactured.

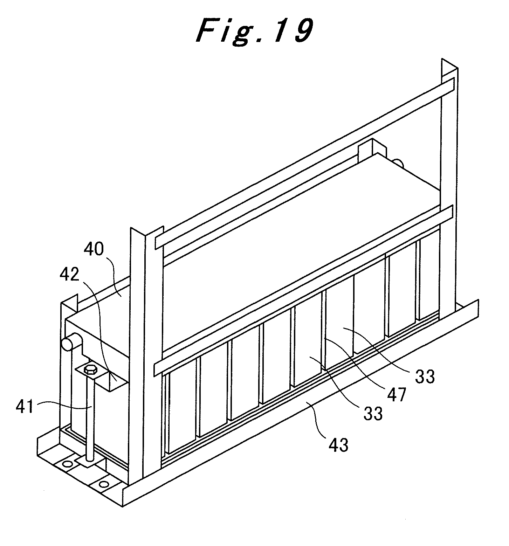

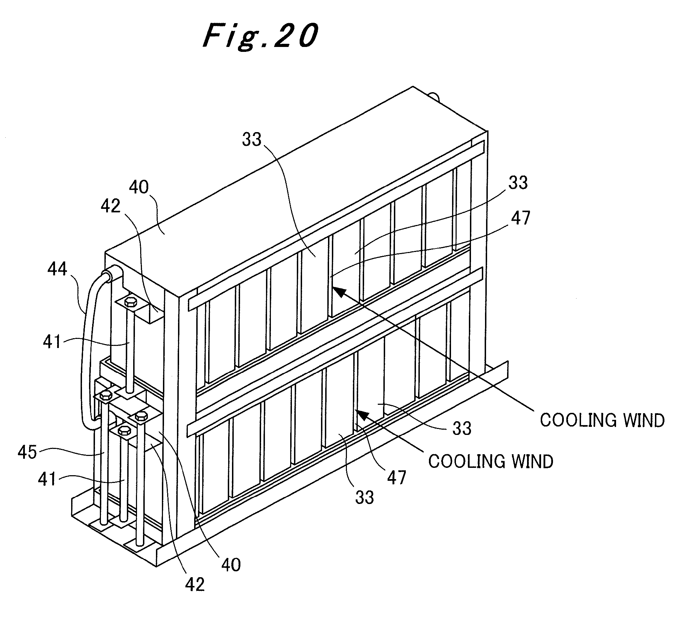

Lastly, a rack 43 as shown in Fig. 18 is prepared. Then, as shown in Figs. 19 and 20, two battery packs are stacked vertically and placed on the rack 43, and thereafter electrically connected to each other by a cable 44. Meanwhile, each battery pack is fixed to the rack 43 with stud bolts 45.

As described above, the battery pack structure of Embodiment 2 is characterized by including: the sheet 32 in which the multiple battery positioning holes 48 are formed at constant intervals and the sheet 31 (or a sheet obtained by integrating these sheets together); the multiple batteries 33 whose end portions on the opposite side to the electrodes thereof are fitted into the battery positioning holes 48 of the sheet 32, respectively, so that the batteries 33 are housed with the gap 47 formed between the batteries 33 adjacent to each other; the caps 50 each having the electrode holes 37A and 37B through which the electrodes 34A and 34B of the corresponding battery 33 are inserted, the caps 50 covering the electrode-side end portions of the batteries 33 in such a way as to separate the spaces including the electrodes 34A and 34B from the spaces including the gaps 12; the conductors (the bus bars 38 or the like) connecting the batteries 33 at their electrodes 34A and 34B in the spaces including the electrodes 34A and 34B; and the shielding unit (the case 1, the fixing plate 20, the top cover 22) shielding, from the outside, the spaces including the electrodes 14A and 14B. Thus, cooling wind can flow through the gaps 47 between the adjacent batteries 33. Accordingly, a structure to cool the batteries 33 can be achieved. Moreover, the caps 50 separate the spaces including the electrodes 34A and 34B from the spaces including the gaps 47. Thus, the cooling wind flowing through the gaps 47 between the batteries 33 can be inhibited by the caps 50 from flowing partly to the electrodes 34A and 34B of the batteries 33. Accordingly, even if the cooling wind contains dust and moisture, it is possible to prevent the dust and moisture from adhering to the electrodes 34A and 34B to deteriorate the performance of the batteries 33.

The battery pack structure of Embodiment 2 is also characterized in that: the caps 50 are provided to the batteries 33 individually; and the caps 50 are configured to separate the spaces including the electrodes 34A and 34B from the spaces including the gaps 47 in such a state that the caps 50 cover the electrode-side end portions of the respective batteries 33, the electrodes 34A and 34B of the batteries 33 are inserted respectively into the electrode holes 37A and 37B of the caps 50, and the caps 50 adjacent to each other are in tight contact with each other. Thus, in addition to the above described advantageous effects, there is provided such an advantageous effect that even when the number of batteries and the arrangement of the batteries are changed in the battery pack, these changes can be handled easily.

The battery pack structure of Embodiment 2 is also characterized in that the sheets 31 and 32 (or a sheet obtained by integrating these sheets together) are electrically insulating sheets, and the caps 50 are electrically insulating caps. Thus, the gaps 472 formed between the batteries 33 can achieve not only a structure to cool the batteries 33, but also a structure to electrically insulate the containers 35 of the adjacent batteries 33 from each other.

The battery pack structure of Embodiment 2 is also characterized in that the sheets 31 and 32 (or a sheet obtained by integrating these sheets together) and the caps 50 are each made of rubber. Thus, vibrations can be absorbed by the rubber sheets 31 and 32 (or a rubber sheet obtained by integrating these sheets together) and the rubber caps 50. Accordingly, the battery pack structure is given a vibration resistance enough to withstand vibrations when mounted to a hybrid forklift or the like.

The caps 50 are provided to the batteries 33 individually. Note, however, that the present invention is not limited to this, and integrated caps as below may be used instead.

Specifically, though the illustration is omitted, the multiple batteries 33 constituting the battery pack are grouped into multiple groups (e.g., the ten batteries 33 in the illustrated example are grouped into two groups each of five batteries 33). The caps (e.g., electrically insulating caps made of rubber or the like) are formed as integrated caps provided respectively to the groups (e.g., five caps 50 are integrated together for each five batteries 33). The integrated caps each cover the electrode-side end portions of the batteries 33 in the corresponding one of the groups. The integrated caps are configured to separate spaces including the electrodes 34A and 34B projecting from the electrode holes from the spaces including the gaps 47 in such a state that the electrodes 34A and 34B of the batteries 33 in the groups are inserted respectively into the electrode holes of the integrated caps, and the integrated caps adjacent to each other are in tight contact with each other.

Even in the case of this configuration, advantageous effects similar to those described above can be achieved. In addition, in the case of this configuration, since the multiple batteries 33 are grouped into multiple groups, and the caps are formed as integrated caps provided respectively to the groups and each covering the electrode-side end portions of the batteries 33 in the corresponding one of the groups, the work of covering the batteries 33 with caps can be made simple.

Alternatively, though the illustration is omitted, the caps (e.g., electrically insulating caps made of rubber or the like) are formed as one integrated cap provided to all the multiple batteries 33 (e. g. , ten caps 15 are integrated together for the ten batteries 33 in the illustrated example). The integrated cap is configured to separate the spaces including the electrodes 34A and 34B projecting from the electrode holes from the spaces including the gaps 47 in such state that the integrated cap covers the electrode-side end portions of the multiple batteries 33, and the electrodes 34A and 34B of the multiple batteries 33 are inserted respectively into the electrode holes of the integrated cap.

In the case of this configuration too, advantageous effects similar to those described above can be achieved. In addition, in the case of this configuration, since the caps are formed as one integrated cap provided to all the multiple batteries 33, and the integrated cap covers the electrode-side end portions of the multiple batteries 33, the work of covering the batteries with caps can be made significantly simple.

### INDUSTRIAL APPLICABILITY

The present invention relates to a battery pack structure including multiple batteries and is useful when applied to battery packs mounted, for example, to electric forklifts and hybrid forklifts.

### EXPLANATION OF REFERENCE NUMERALS

1 case, 2A, 2B lateral plate, 3A, 3B opening, 4A, 4B support plate, 5 bottom plate, 6A, 6B protrusion, 7A, 7B screw hole, 8, 9 rubber sheet, 10 battery positioning hole, 11 battery, 12 gap, 13 container, 14A, 14B electrode, 15 rubber cap, 16 recess portion, 17 protruding portion, 18A, 18B electrode hole, 19 bus bar, 20 fixing plate, 21 screw, 22 top cover, 23 screw, 24 electronic circuit board, 31, 32 sheet, 33 battery, 34A, 34B electrode, 35 container, 36 recess portion, 37A, 37B electrode hole, 38 bus bar, 39 frame, 40 fixing plate, 41 stud bolt, 42 protruding portion, 43 rack, 44 cable, 45 stud bolt, 47 gap, 48 battery positioning hole, 50 rubber cap

## Claims

1. A battery pack structure **characterized by** comprising:
a sheet in which a plurality of battery positioning holes are formed at constant intervals;
a plurality of batteries whose end portions on the opposite side to electrodes thereof are fitted into the battery positioning holes in the sheet, so that the batteries are housed in such a manner that a gap is formed between the batteries adjacent to each other;
a cap having electrode holes through which the electrodes of the batteries are inserted, the cap covering electrode-side end portions of the batteries in such a way as to separate a space including the electrodes from a space including the gap;
a conductor connecting the batteries at their electrodes in the space including the electrodes; and
a shielding unit shielding the space including the electrodes from an outside.

2. The battery pack structure according to claim 1, **characterized in that**
the cap is provided to each of the batteries individually, and
the caps are configured to separate the space including the electrodes from the space including the gap in such a state that the caps cover the electrode-side end portions of the respective batteries, the electrodes of the batteries are inserted respectively into the electrode holes of the caps, and the caps adjacent to each other are in tight contact with each other.

3. The battery pack structure according to claim 1, **characterized in that**
the plurality of batteries are grouped into a plurality of groups,
the cap is formed as integrated caps provided to the groups, respectively, and
the integrated caps are configured to separate the space including the electrodes from the space including the gap in such a state that the integrated caps each cover the electrode-side end portions of the batteries in the corresponding one of the groups, the electrodes of the batteries in the groups are inserted respectively into the electrode holes of the integrated caps, and the integrated caps adjacent to each other are in tight contact with each other.

4. The battery pack structure according to claim 1, **characterized in that**
the cap is formed as one integrated cap provided to all the plurality of batteries, and
the integrated cap is configured to separate the space including the electrodes from the space including the gap in such state that the integrated cap covers the electrode-side end portions of the plurality of batteries, and the electrodes of the plurality of batteries are inserted into the electrode holes of the integrated cap.

5. The battery pack structure according to any one of claims 1 to 4, **characterized in that** the sheet is an electrically insulating sheet, and the cap is an electrically insulating cap.

6. The battery pack structure according to claim 5, **characterized in that** the electrically insulating sheet and the electrically insulating cap are each made of rubber.
